# EUROPEAN PATENT APPLICATION

(11) **EP 2 210 495 A1**
(43) Date of publication of application: **28.07.2010**
(21) Application number: 09100069.5
(22) Date of filing: 23.01.2009
(51) Int. Cl.: A22C 17/12, A22C 17/00

(54) **A method and apparatus for removing fat from meat cuts**

(71) Applicant: Slagteriernes Forskningsinstitut, 4000 Roskilde (DK)
(72) Inventor: Lauritzen, Benny, DK-6500, Vojens (DK); Black, Per, DK-4100, Ringsted (DK)

(57) **Abstract**

In a method for removing fat from a meat cut (2), the meat is moved past a knife (16) or a knife is moved through the meat cut, whereby the shape of the fat-to-lean interface (42) inside the meat cut is adapted to the shape of the knife by deformation of the meat cut.
Apparatus for removing fat from a meat cut (2) comprises a meat conveyor system (19,20); a knife (16) for separating a layer of fat (17) from the meat cut and extending transverse to a transport path; actuators (6,30) for adapting the shape of the meat conveyor in dependency of data describing the distribution and thickness of fat; and pressure members (9) for pressing the meat cut against the conveyor.

## Description

### Technical Field

The present invention relates to a method and apparatus for removing or trimming fat from meat cuts.

Many standardised meat cuts, such as several cuts of pork, comprise a layer of subcutaneous fat and possibly the corresponding portion of the animal's skin (e.g. pork rind).

The thickness of a layer of fat on one face of a meat cut, such as subcutaneous fat, may vary considerably over a cut of meat, that is, along the main extension of the meat cut, and transversely to this extension - these two directions generally following the extension of the animal's skin. In such cases, it is necessary to remove a layer of fat having considerable variation in thickness in order to leave a layer of fat on the lean of the meat cut having a generally uniform thickness. Meat cuts having a thin layer of fat with a uniform thickness are in considerable market demand in modem times.

Manual trimming of meat cuts in order to obtaining a thin, uniform layer of fat on the lean is quite difficult, and a time-consuming and strenuous work as well. Industrial injuries arising from such work are well known.

### Prior Art

Machines are known for removing (trimming) a layer of fat from a meat cut such as a pork side or a pork loin, in which the meat cut is forced along a conveyor and past a knife tool which is stationary in the direction of movement of the meat cut. The knife tool separates a layer of fat and possibly skin from the meat cut. The meat cut is normally conveyed with its fat side or fat-and-skin side facing downwards, usually resting on some form of conveyor. The removed fat is normally being utilised as a commercial product.

For use with pork, these machines are often referred to as derinding machines.
In the present disclosure, the term fat removing machine is used.

From US 6,129,625; US 7,001,261; and US 2001/36,807, machines of this kind are known, in which the thickness of fat on the meat cut is measured, monitored or sampled upstream of the knife tool, and in which the knife tool may be continuously movable and/or deformable in order to follow in a desired fashion the fat-to-lean interface of the meat cut while the meat cut is being forced past the knife tool, so that more fat is cut from the lean, or so that a layer of fat having a desired thickness is being left on the lean. Still, the performance of these machines leaves very much indeed to be desired when it comes to producing cuts of meat having a layer of fat left on the lean having a uniform or near to uniform thickness.

In the machine of US 7,001,261, the knife tool is deformable in that it consists of four U-shaped knife blade loops, which are not individually deformable but each of which are continuously adjustable in height so that the knife tool viewed as a whole may attain the shape of a stepped curve when viewed in the direction of motion of the meat cut. The adjustment in height of each knife blade loop may be achieved in that the angle of inclination of that loop is adjustable during the cutting process, so that the loop will tend to be lifted upwards or pressed downwards within the layer of fat, as its angle of inclination is increased or reduced, much the way in which an airplane's ailerons function.

Even if this knife tool viewed as a whole is thus adaptable to a certain degree to variations in the fat-to-lean interface, both in the direction of movement of the meat cut and transversely to this direction, each knife blade loop will necessarily cut its own strip of fat from the meat cut, and the removed fat will thus be divided into as many strips as there are knife blade loops in the knife tool. This will adversely reduce the commercial value of the fat.

US 4,246,837 teaches a fat trimming apparatus of the kind mentioned above, in which the thickness of fat is sampled in several positions along the meat cut, at positions distributed in the direction of conveyance and optionally distributed transversely to the direction of conveyance as well. Sampling is made while the meat cut is kept at a standstill. The meat cut is subsequently forced in a horizontal direction past a knife blade in the cutting station, while the knife blade is continuously adjustable in a vertical direction so as to vary the thickness of the layer of fat cut from the lean along the meat cut. It is mentioned that the knife blade may be movable as well so as to vary its inclination, while it remains unclear which direction of inclination is meant.

Instead of continuously adjusting the knife blade in a vertical direction, it is briefly mentioned in US 4,246,837 that the position of the meat cut relative to the knife blade may be adjusted. It is briefly mentioned as well in this paper that the meat cut may be held stationary and the knife tool forced though the fat layer of the meat cut.

### Object of the Invention

The object of the present invention is to provide an improved method and improved apparatus for removing fat from meat cuts, where essentially all subcutaneous fat is removed form the lean of the meat cut, or where a layer of fat having a desired and uniform thickness is left on the lean. It is part of the object that the fat is preferably to be removed as one single piece of fat.

### Summary of the Invention

In a first aspect of a method for removing fat from one face of a meat cut, the object of the invention is met in that the method comprises moving the meat cut along a transport path and past a knife tool which is not displaceable in the direction of the transport path, whereby the knife tool cuts a layer of fat and possibly skin from said face of the meat cut; and in particular in that the method comprises temporarily adapting the shape of a fat-to-lean interface inside the meat cut to the shape of the knife tool by effecting deformation of the meat cut in directions transverse to said face while the meat cut is being moved past the knife tool; and bringing the fat-to-lean interface into a desired distance from a cutting edge of the knife tool during cutting.

In a second aspect of a method for removing fat from one face of a meat cut, the object of the invention is met in that the method comprises moving a knife tool along a cutting path and through the meat cut while keeping the meat cut from displacing in the direction of the cutting path, whereby the knife tool cuts a layer of fat and possibly skin from said face of the meat cut; and in particular in that the method comprises temporarily adapting the shape of a fat-to-lean interface inside the meat cut to the shape of the knife tool by effecting deformation of the meat cut in directions transverse to said face; and bringing the fat-to-lean interface into a desired distance from a cutting edge of the knife tool during cutting.

By adapting the shape of the fat-to-lean interface inside the meat cut to the shape of the knife tool during cutting, it is obtained that the knife tool may cut along the fat-to-lean interface or in a controlled distance from the fat-to-lean interface. Hereby is attained, firstly that the fat is cut from the lean leaving no fat on the lean or leaving a layer of fat having a constant and desired thickness on the lean; and secondly, that the fat is removed as one single piece of fat. The latter is highly desirable because single-piece fat has a considerably higher market value than fat in smaller pieces or chips.

For both aspects of the method of the invention, it is generally preferred that the above-mentioned deformation is being effected by pressing the meat cut between a member having a controllable shape and a resilient member.

Even if a meat cut may be quite soft and even flexible to some degree, it is more or less incompressible, and thus, the shape of a controllable shape member will be reproduced with adequate precision in a fat-to-lean interface inside the meat cut, when a surface of the meat cut is pressed against the controllable shape member.

It is further preferred that the deformation is being effected locally in a portion of said meat cut immediately preceding said knife tool.

As the shape of the fat-to-lean interface need only be adapted to the shape of the knife tool at the very moment of cutting, it is only necessary that the fat-to-lean interface has the shape in question in a short zone immediately preceding the knife tool, as the knife tool is displaced through the meat cut, or the meat cut is moved past the knife tool, respectively.

It is alternatively preferred that the deformation is being effected substantially simultaneously across the whole of said face of the meat cut.

Deforming only a short zone of meat preceding the knife tool seems to necessitate dynamically deforming the meat cut in some form of wave motion propagating along the meat cut in the direction of cutting. If the entire meat cut is deformed simultaneously, that is, it is constantly kept deformed during the entire duration of the cutting process, any dynamical meat deforming problem may thus avoided. Such problem may possibly arise if high cutting speeds are aimed at.

For particular meat products, it is preferred to keep the above-mentioned, desired distance constant across the whole of said face of the meat cut, whereby a layer of fat having a thickness with correspondingly limited variation is being left on the face.

In this connexion, it may be preferable to control the desired distance by controlling the position of the meat cut relative to the knife tool, or the knife tool relative to the meat cut, in a direction transversely to said face of the meat cut, whereby a layer of fat having a corresponding, desired thickness is being left on the face.

The market value of a meat cut with a layer of fat having a constant thickness will in many cases be significantly higher than for meat cuts with no fat - or for meat cuts having an irregular layer of fat, such as meat cuts from which no fat has been trimmed. However, to leave a layer of fat having a constant thickness by manual trimming is quite difficult, as the fat is opaque. Thus, to be able to obtain a constant thickness fat layer by machine trimming will be very advantageous.

In general, it is preferred to control the deformation on the basis of previously stored data describing a typical thickness-of-fat distribution along said face for a relevant class of meat cuts.

It may alternatively be preferable to control the deformation on the basis of data obtained from measurement carried out on the meat cut immediately prior to cutting and describing the thickness-of-fat distribution along said face.

Alternatively, it is preferred to control the deformation on the basis of previously stored data in combination with data obtained from measurement carried out on the meat cut immediately prior to cutting, both types of data describing a thickness-of-fat distribution along said face.

In this connexion, it is preferred that at least some of the data are sampled values, each stating a local fat thickness.

In order to be able to deform the meat cut in an adequate manner, it is necessary to possess data for the shape and location of the fat-to-lean interface inside the meat cut. These data may be obtained by e.g. CT scanning each meat cut prior to cutting, or they may be empirical data obtained by dissecting or CT scanning a number of representative meat cuts of the type in question.

Such empirical data may be grouped according to external attributes of the meat cut or of the carcass from which the meat cut has been cut, such as weight or dimensions. When fat is to be removed from an actual meat cut, it will then be possible to choose suitable data from stored sets of data on the basis of e.g. weight and size of the actual meat cut. This will eliminate the need for making on-line measurements by e.g. CT scanning every meat cut.

If however the use of empirical data does not lead to satisfactory results, or simple and/or less costly methods of scanning become available, it may be preferable to scan every single meat cut prior to cutting. Alternatively, a compromise may be made in that every single meat cut is scanned by a low-cost method possibly giving scans with a low resolution and/or precision, or simply only giving sample values in a few points, and the scan data may then be combined with empirical data by suitable computation methods.

In apparatus for removing fat from one face of a meat cut in accordance with the first aspect of the method of the invention, the above-mentioned object is met in that the apparatus comprises a conveyor for moving a meat cut along a transport path with said face extending in the direction of the transport path and in a direction of extension transverse to the transport path; and a knife tool for separating a layer of fat and possibly skin along said face from the rest of the meat cut, the knife tool extending in said direction of extension transverse to the transport path while not being displaceable in the direction of the transport path; and in particular in that the apparatus further comprises actuators for adapting the shape of a meat carrying surface of the conveyor, at least in areas immediately preceding a cutting edge of the knife tool, in dependency of data describing the distribution and thickness of fat on said face; and one or more pressure members for pressing the meat cut against the meat carrying surface.

By these measures, similar advantages are obtained as mentioned above with respect to the method of the invention.

In one embodiment, it is preferred that the meat carrying surface comprises a number of wheels having axes of rotation in parallel with said direction of extension and occupying an area of the meat carrying surface at least immediately preceding said cutting edge, the axis of each wheel being displaceable by means of one of said actuators in a direction transverse to said transport path and to said direction of extension while not being displaceable in the direction of the transport path.

In another embodiment, it is preferred that the meat carrying surface comprises a number of swingable runners having axes of swing in parallel with said direction of extension and supporting edges or faces occupying an area of the meat carrying surface at least immediately preceding said cutting edge, each runner being displaceable by means of one of said actuators in a direction transverse to said transport path and to said direction of extension while not being displaceable in the direction of the transport path.

In these two embodiments, an advantageous possibility is obtained of compensating for irregularities of a relatively short "wavelength" in the fat-to-lean interface. The wheels or runners, respectively, may be arranged closely adjacent to each other, and the number of wheels or runners may thus be chosen high enough to obtain a fine resolution in the curvature of the shape that is obtained by setting the wheels or runners, respectively, to individual heights.

In a third embodiment, it is preferred that the meat carrying surface comprises a number of pistons having axes of movement transverse to said transport path and to said direction of extension and supporting ends occupying an area of the meat carrying surface at least immediately preceding said cutting edge, each piston being displaceable along its axis of movement by means of one of said actuators.

In this connexion, the number of pistons is preferably one, and the piston is preferably situated between rigid areas of the meat carrying surface.

By the one-piston embodiment, a very simple form of variable shape support is obtained, at the cost of resolution. In the case of pork loins, investigation has shown that the main curvatures of the fat-to-lean interface - as seen in cross-section - comprises a rounded shape in each side of the pork loin which extend for the entire length of the loin, and a depression in the hip end of the loin, approximately along the middle of the loin and extending for between one third and half of the loin.

The rounded shape of the fat-to-lean interface in each side of the loin may be compensated for by making the support lower at the sides than in the middle. Hereby, the sides of the meat cut will hang down and thereby, the roundings of the fat-to-lean interface will be flattened out. The piston is to be arranged opposite the depression in the fat-to-lean interface, and when the piston is lowered, the fat-to-lean interface will sag correspondingly opposite the piston, and the depression thus flattened out.

Experiments have shown that, even if this embodiment of a variable shape support will not provide any ample resolution, it may well suffice if the demands to the thickness variations in the layer of fat left on the lean are modest.

It is generally preferred that the meat carrying surface comprises a flexible conveyor belt situated between said meat cut and said wheels, runners or pistons, respectively.

It may be that disadvantageous or even excessive friction will develop between the meat cut and the variable shape support when the meat cut is slid across the support. It may be as well that the cavities and gaps in the support will become contaminated or clogged with debris from the meat cuts.

In these cases, a flexible conveyor belt may according to the invention be arranged closely above the variable shape support in such a way that the shape of the support is reproduced directly in the carrying surface of the conveyor belt. When the conveyor belt is moved by power, the friction will develop between the variable shape support and the underside of the conveyor belt, and will not influence the movement of the meat cut. At the same time, the belt will shield the variable shape support from debris, and debris may be cleaned from the belt by continuous scraping in ways known *per se.*

In one embodiment, the meat carrying surface comprises a carriage for carrying the meat cut past said knife tool and having a number of pistons with axes of movement transverse to said transport path and to said direction of extension, supporting ends of the pistons supporting said face of the meat cut in its entirety, each piston being displaceable along its axis of movement by means of one of said actuators.

By these measures, the need is eliminated for the variable shape support to adapt dynamically and quickly to the various shapes of the fat-to-lean interface as the meat cut is drawn across the support. If high cutting speeds are to be employed, the dynamical demands may well be high, and it may thus be advantageous to use a meat carrying surface on a carriage, where the variable shape of the surface only needs to be set once, immediately prior to the start of the cutting process.

In this embodiment, it is generally preferred that the apparatus comprises a mechanism for displacing the conveyor or carriage, respectively, and/or the knife tool in a direction transverse to said transport path and to said direction of extension, thereby controlling the thickness of a layer of fat being left on said face of said meat cut after cutting.

By this measure, a comparatively simple adjustment setting for the desired thickness of fat to be left on the lean is attained. In addition, this adjustment will not 'spend' any of the travel of the pistons for the purpose of leaving fat on the lean.

In apparatus for removing fat from one face of a meat cut in accordance with the second aspect of the method of the invention, the above-mentioned object is met in that the apparatus comprises a support for receiving a meat cut with said face extending in directions of extension of the support and keeping the meat cut from displacing in said directions of extension; a knife tool for separating a layer of fat and possibly skin along said face from the rest of the meat cut; and a mechanism for moving the knife tool through a transport path extending along the support and through the meat cut, thereby cutting a layer of fat from the rest of the meat cut; and in particular in that the apparatus further comprises actuators for adapting the shape of a face of the support, at least in areas swept by a cutting edge of the knife tool, and in dependency of data describing the thickness of fat on said face; and one or more pressure members for pressing the meat cut against the support.

By these measures, similar advantages are obtained as mentioned above with respect to the method of the invention. Also, the need is eliminated for the variable shape support to adapt dynamically and quickly to the various shapes of the fat-to-lean interface.

In this aspect of the apparatus of the invention, it is preferred that the support comprises a number of pistons having axes of movement transverse to said transport path and to said direction of extension and supporting ends occupying an area of the support swept by said cutting edge, each piston being movable along its axis of movement by means of one of said actuators.

By these measures, a comparatively simple and cost-efficient variable shape support is obtained, while at the same time the possibility for arranging the support with a high degree of resolution is maintained, that is, the possibility for setting the support to curvatures having a small wavelength.

Preferably, the apparatus further comprises transport members for receiving the meat cut from a supplying conveyor and positioning it onto said support, and for removing the meat cut from the support and placing it onto a removing conveyor.

The transport members are preferably constituted by the pressure members.

As the pressure members must engage the meat cut during its presence on the support, they will be available for contact with the meat cut in the area of the support. The transport members must engage the meat cut in this area as well, and an advantageous synergy will be obtained by adapting the pressure members to serve as transport members as well.

One or more of said pressure members is preferably a resilient pressure roller.

It is preferred that one or more of said pressure members comprises a closed space containing one or more fluids.

By this measure, an advantageous distribution of the pressure is obtained, which will give the pressure member a more secure grip in the meat cut, and will contribute to a gentle and safe handling of the meat cut.

Preferably, the transport members comprise a flexible conveyor belt situated immediately above and supported by said support.

One simple way of positioning the meat cut to the support will be to slide it onto the support. In order to eliminate or reduce friction between the meat cut and the support, a thin, flexible conveyor belt may be arranged as an uppermost surface of the support, and the belt may be arranged to convey the meat cut onto the support and convey it away from the support after cutting.

It is generally preferred that the apparatus further comprises a mechanism for displacing said support, and/or said mechanism for moving the knife tool, in a direction transverse to said transport path and to said direction of extension, thereby controlling the thickness of a layer of fat being left on said face of said meat cut after cutting.

By this measure, a comparatively simple adjustment setting for the desired thickness of fat to be left on the lean is attained. In addition, this adjustment will not 'spend' any of the travel of the pistons for the purpose of leaving fat on the lean.

### Description of Drawings

The invention will be explained in more detail below, with reference to the drawings, in which:
Fig. 1 is a schematic cross section in a knife area of a first embodiment of a derinding machine or fat removing machine according to the present invention;
Fig. 2 is a schematic side view of the knife area of a machine similar to the machine in Fig. 1;
Fig. 3 is a schematic cross section in a knife area of a second embodiment of a fat removing machine of the invention;
Fig. 4 is a schematic longitudinal section in the knife area of the machine in Fig. 3;
Fig. 5 illustrates a particular situation in the use of the machine in Fig. 3;
Fig. 6 is a schematic, oblique view of essential parts of a third embodiment of a fat removing machine of the invention;
Fig. 7 is a schematic cross section in essential parts of fourth embodiment of a fat removing machine of the invention;
Fig. 8 is an oblique view of main components of a prototype of the machine in Fig. 2;
Fig. 9 is a side view of main components of the prototype in Fig. 8; and
Fig. 10 is an oblique view of the components in Fig. 9, with certain other components of the machine shown as well.

### Detailed Description of Preferred Embodiments

In the various figures, similar reference designations refer to same or similar items or structures. Parentheses around a reference designation in this text indicate that this reference designation does not appear in the figure currently referred to, but may be found in other drawing figures.

In the drawings, the fat of the meat cut is generally designated by a dense hatching and the lean of the meat cut is designated by a lighter hatching. These hatchings do not designate cross sectioning; all meat cuts are shown in end view, side view or oblique view. The two types of hatching are merely indicating the two types of tissue in the meat cut in the same way as two different colours.

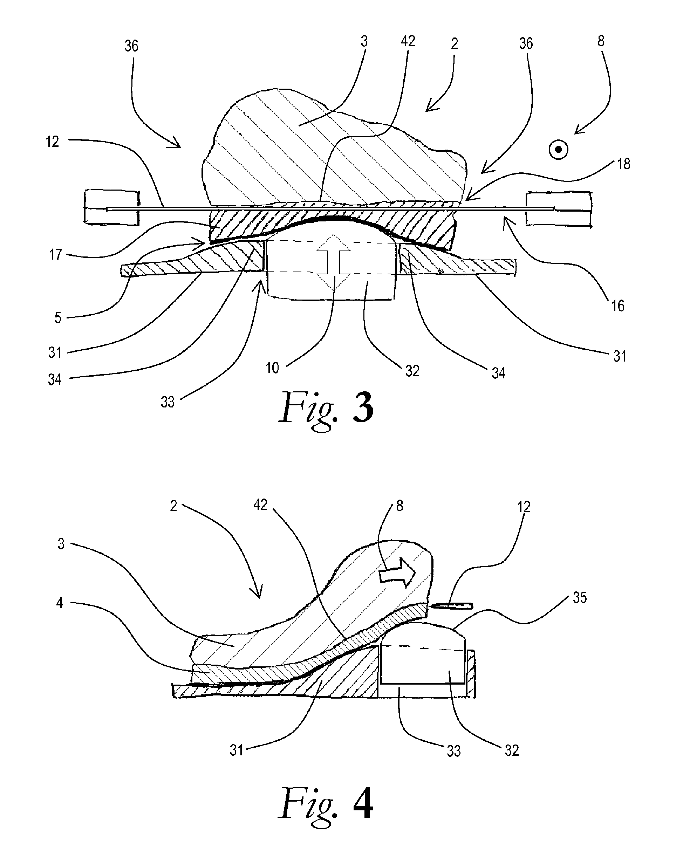

Hatching of machine parts in Figs 3-5, however, do indicate cross-sectioning.

The rind of the meat cut is designated in the drawings by solid black colour if the end or the side of a meat cut is viewed and by screen tint if the surface of the rind is viewed.

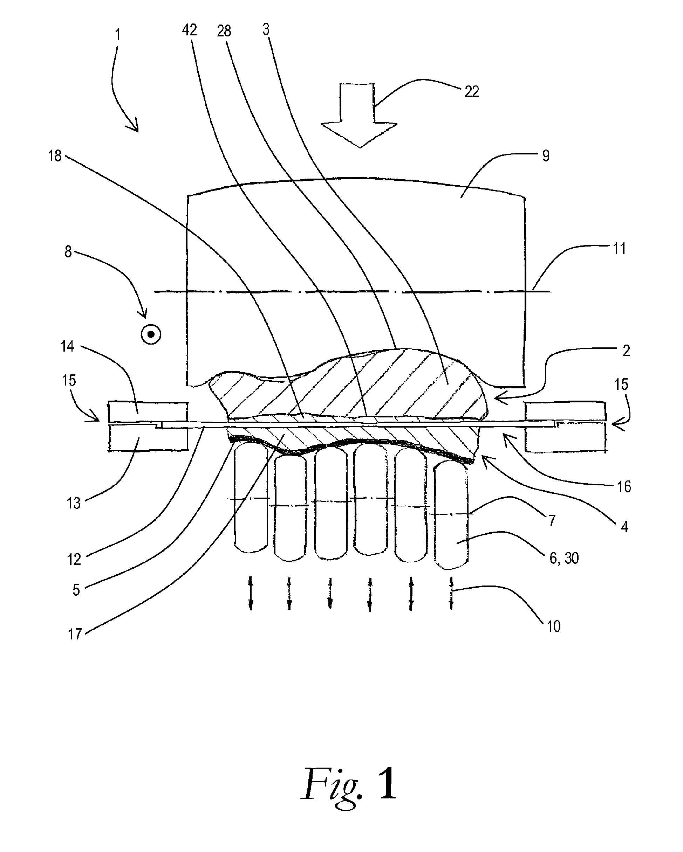

Fig. 1 shows schematically a cross-section in a central area of a fat removing machine 1 according to the invention. A meat cut 2 such as a loin of pork or a pork side is being passed through the machine 1 in a direction of transport 8 orthogonal to the paper and towards the observer. The meat cut 2 consists generally of the lean 3, the fat 4 and the rind 5. The meat cut 2 shown has a clearly visible fat-to-lean interface 42, which extends throughout the meat cut 2 and constitutes a surface of discontinuity between the lean 3 and the fat 4 of the meat cut 2.

The fat 4, of which some is to be removed, is here subcutaneous fat located between the rind 5 and the lean 3. The rind 5 and the subcutaneous fat 4 generally extend in two directions, namely in the direction of transport 8 and in the horizontal direction in the plane of the paper in Fig. 1. These two directions generally define a face, which corresponds to the skin surface of the animal from which the present cur of meat 2 is taken, and which corresponds to that face of the meat cut 2 from which fat is to be removed. This face is thus facing downwards in Fig. 1.

In a meat cut such as a loin of pork, the fat-to-lean interface 42 extends in an uneven fashion through the meat cut 2, that is, it is far from being regular and in any case far from being planar.

The purpose of the fat removing machine 1 in Fig. 1 is to separate a layer of fat 17 from the rest of the meat cut. At present-day market conditions, it is generally preferred to separate the fat 17 from the lean 3 either directly along the fat-to-lean interface 42 so as to obtain e.g. a pork loin without any significant subcutaneous fat left, or in such a way that a layer of fat 18 having a constant thickness is being left on the lean. The desired thickness of such a layer of fat 18 is depending on actual market conditions; to-day, it may be e.g. 3 or 10 mm. The fat 4 is preferably to be removed from the meat cut 2 as one single piece of fat, because single-piece fat has a higher market value than fat in smaller pieces or chips.

In Fig. 1, the meat cut 2 is resting on a supporting structure consisting of a number of discrete elements 30, arranged side-by-side transversely to the direction of transport 8. The elements 30 are here shown as six rollers or wheels 6 having axes 7 of rotation. The wheels 6 thus support the meat cut 2 while letting it move with low friction in the direction of transport 8.

A deformable or resilient traction roller 9 has an axis of rotation 11 and is being rotated by drive means not shown, while being pressed down onto the meat cut 2 in the direction 22, thereby forcing the meat cut 2 forwards in the direction of transport 8 while at the same time as a pressure member pressing the meat cut 2 downwards against the supporting structure. It is seen at 28 that the roller 9 deforms as it gives way for the reaction from the meat cut 2. The wheels 6 provide the necessary support and reaction force, so that the traction roller 9 may have a sufficient grip in the meat cut 2 without undue slip. Such traction rollers for forcing forward a meat cut 2 are known *per se* in the art.

A stationary knife tool 16 is fixed in the machine 1. The knife tool 16 has an elongate knife blade 12 which is supported at each end by a knife support 15 e.g. comprising a lower clamping part 13 and an upper clamping part 14. The knife supports 15 support and clamp the knife blade 12 so as to being immobile during the operation of the fat removing machine 1.

In the configuration of the machine shown in Fig. 1, a layer of fat 17 is thus cut from the meat cut 2 as the meat cut 2 is being forced past the knife blade 12 by the action of the traction roller 9. The wheels 6 are supporting the meat cut 2 and providing a counter-action for the pressing of the traction roller 9 in the direction 22.

In Fig. 1, the machine has been set for leaving a layer of fat 18 having a desired thickness on the lean 3 of the meat cut 2.

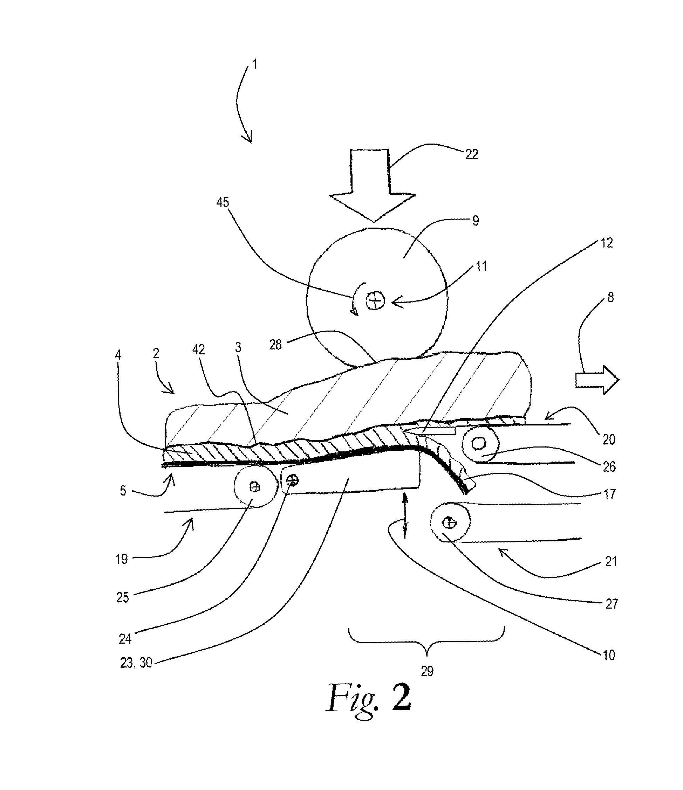

A similar situation is shown in Fig. 2, where the direction of transport 8 is to the right in the figure. The traction roller 9 is being pressed down onto the meat cut 2 by a force acting in the direction 22, while rotating in the direction of rotation 45, and the traction roller 9 deforms correspondingly at 28, as in the situation in Fig. 1.

The resilient traction roller 9 acts as a pressure member in the same way as in Fig. 1, pressing the meat cut 2 downwards against a supporting structure.

In Fig. 2, the supporting structure comprises a number of discrete elements 30, here shown as swingable runners 23 having axes of swing 24 and being distributed horizontally relative to each other, transversely to the direction of transport 8, in the same way as the wheels 6 are distributed in Fig. 1. Owing to the direction of view in Fig. 2, only one swingable runner 23 is to be seen, that is, the one nearest to the observer.

The term 'runner' is to be understood as an elongate structure sliding against a surface, like the runner on a sledge sliding on the snow. In the present situation, however, the runner is stationary, and the rind face (5) of the meat cut 2 is sliding on the upper face or edge of each runner 23.

The transportation of the meat cut 2 effected by the traction roller 9 is assisted by conveyor belts 19, 20 with associated conveyor belt rollers 25, 26, conveying the meat cut 2 before and after passage of the meat cut 2 through a knife area 29 of the derinding machine or fat removing machine 1. The knife area 29 is the area or section of the machine 1 where the knife blade 12 is located.

The conveyor belts 19, 20, 21; the traction roller 9; and the runners 23 thus constitute elements of a conveyor system conveying the meat cut 2 through the knife area 29, and the runners 23 thereby constitute a meat carrying surface in the conveyor system having an adaptable shape.

As the meat cut 2 passes by the knife blade 12, a layer of fat 17 is cut from the meat cut 2. This may then hang down as indicated in Fig. 2, or it may be guided downwards by guiding means not shown, so that it will land on e.g. a conveyor belt 21 with an associated conveyor belt roller 27 for being transported away for collection.

In Fig. 1, the supporting wheels 6 are displaceable in respective directions 10.
That is, each wheel 6 runs on a shaft corresponding to its axis 7 of rotation, and the shaft is fastened to a structure not shown, enabling controlled movement of each axis 7 in a direction transverse to the direction of transport 8 and to the direction of extension of the knife blade 12. In Fig. 1, the directions 10 of movement are essentially vertical.

The wheels 6 are displaced by control and displacement means not shown. The skilled person will be able to point to useful solutions, on the background of the detailed description below.

In Fig. 2, each of the supporting, swingable runners 23 is swingable around an axis of swing 24. That is, the downstream end 30 of each runner 23 is displaceable in a direction 10, whereby the runner 23 will swing or rock around its axis of swing 24. Also in this case, the skilled person will be able to point to useful solutions on the background of the present description. As in Fig. 1, the direction 10 is essentially vertical, but the movement is not strictly rectilinear.

The control of the wheels 6 or swingable runners 23 in the directions 10 will now be explained. With reference to Fig. 1, the six elements 30 shown in the figure may be taken to represent the runners 23 as well as the wheels 6. Now, as it appears from Fig. 1, the elements 30 will constitute a supporting structure or face, supporting the meat cut 2 against the downward pressure exerted on the meat cut by the resilient traction roller 9. The cross-sectional shape of the supporting structure or face (the 'support') may be varied by varying the vertical position of each element 30.

In Fig. 1, the vertical positions of the elements 30 have been set to appropriate values, and the upper faces or edges of the elements 30 now constitute a supporting structure with a curved upper 'surface'. This upper surface is not a surface in the proper sense of the word, but rather an imaginary envelope of the upper faces or edges of the elements 30. This envelope or curve may thus be set and changed as desired by corresponding, appropriate control of the position of each element 30 in its direction 10, and the downwards facing face of the meat cut will attain a curvature corresponding to this envelope curve.

In Fig. 1, the downward-facing rind face 5 of the meat cut 2 corresponds directly to said imaginary envelope.

As the knife blade 12 is stationary, it will now according to the invention be possible to vary or control the local thickness of the layer of fat 17 cut off from the meat cut 2 by the knife tool 16 as the meat cut 2 is being forced past the knife tool 16. The local thickness of fat cut off may be controlled by displacing each of the various elements 30. If the elements 30 are lowered, the meat cut 2 will be lowered correspondingly as it is pressed against the elements 30 by the resilient traction roller 9. If the various elements 30 are controlled to define a desired curvature or envelope of the supporting structure, then the face of the meat cut 2 supported by the elements 30 will assume a similar curvature, and the local thickness of the layer of fat 17 cut of will vary correspondingly.

The local thickness of the layer of fat 17 cut off may thus be controlled crosswise to the direction of transport 8 by controlling each element 30 to a desired, individual position in the direction 10. The thickness may likewise be controlled along the direction of transport 8 by dynamically displacing the various elements as the meat cut 2 is being forced through the knife area 29 of the fat removing machine 1. In this way, any curvature of the fat-to-lean interface 42 may be approximated by appropriate control of the vertical positions of the elements 30 as the meat cut 2 is being forwarded through the knife area 29 of the fat removing machine 1.

The downwards force exerted on the meat cut 2 by the resilient traction roller 9 makes the downward-facing face 5 of the meat cut 2 follow the vertical positions of the elements 30. It appears from Fig. 1 that the elements 30 have been set to momentary, vertical positions that correspond to the local thickness of fat on the meat cut 2. That is, the greater the local thickness of fat is, the lower the corresponding element 30 has been momentarily set. By controlling the individual, momentary, vertical positions of the elements 30 this way, and thereby deforming the meat cut correspondingly, it can be achieved that the fat-to-lean interface 42 will take the form of a nearly planar surface within the knife area 29 - or, in fact, the form of any other surface desired, within limits set by the nature of the actual meat cut 2 and the capacity of the actual embodiment of the fat removing machine 1. In the case of Figs 1-2, the knife blade 12 is straight and consequently, the desired shape of the fat-to-lean interface 42 in the knife area 29 will be a planar surface.

By now adjusting the position of the knife blade 12 in height - or by shifting the vertical positions of the elements 30 by the same amount - the thickness of the layer of fat 18 left on the lean may be controlled.

The 'resolution' or degree of detail that can be obtained in the thickness variation of the layer of fat 17 cut off from the lean 3 of the meat cut 2 is dependent on the number and shape of the elements 30 and on the nature of the control of the position of each element 30 in the direction 10. A higher number of elements 30 across the width of the knife area 29 will provide for a finer resolution in the crosswise thickness variation of the layer of fat 17 cut off, and smaller elements 30 and a faster control and faster displacement of the elements 30 in the directions 10 will provide for a finer resolution in the lengthwise thickness variation. Also, the inherent flexibility or stiffness of the meat cut 2 will set limits for the degree of detail obtainable.

Experiments made using average pork loins have however shown that a satisfactory resolution in this respect seems readily obtainable with the use of a modest number of elements 30 and a reasonable size and shape of the elements 30, and that it does not seem that it will be necessary to control the position of the elements 30 with very high speed or acceleration.

Inspection of pork loins cut from ordinary slaughter hogs has further shown that the fat thickness does not exhibit very steep or abrupt variations along the loin. Thus, it does not seem that it will be necessary to make unrealistic demands to a fat removing machine in respect of the number of elements 30 or the speed and acceleration in their movement in directions 10, in order to obtain satisfactory results.

Fig. 3 is a schematic cross-sectional view similar to Fig. 1, of an alternative form of the fat removing machine 1 of the invention. The deformable traction roller 9 has been omitted for clarity. This machine is similar to the machines of Figs 1-2, only the variable support for the meat cut 2 is made in a different way. The support comprises a fixed support 31 having a raised central portion 34 with a central bore 33. In the bore 33, a piston 32 is located, being displaceable in a direction 10 by controlled displacement means not shown. The direction 10 is essentially vertical as in the embodiments of Figs 1-2.

In Fig. 4, the arrangement in Fig. 3 is shown in schematic side view. In Fig. 4, the raised central portion 34 is shown somewhat higher than in Fig. 3, as an alternative embodiment.

The piston 32 has a rounded upper face 35, which continues the rounded shape of the raised central portion 34 when the piston upper face 35 is aligned with the upper end of the central bore 33. The height of the raised central portion 34 may thus be varied by moving the piston up and down in the direction 10.

As the thickness of the fat 4 on a pork loin is larger at the sides 36 of the loin (Fig. 3), the rounded shape of the raised central portion 34 plus the rounded piston upper face 35 provides a fair approximation to the shape of support required to leave a layer of fat 18 with uniform thickness on the lean 3 of a pork loin (2).

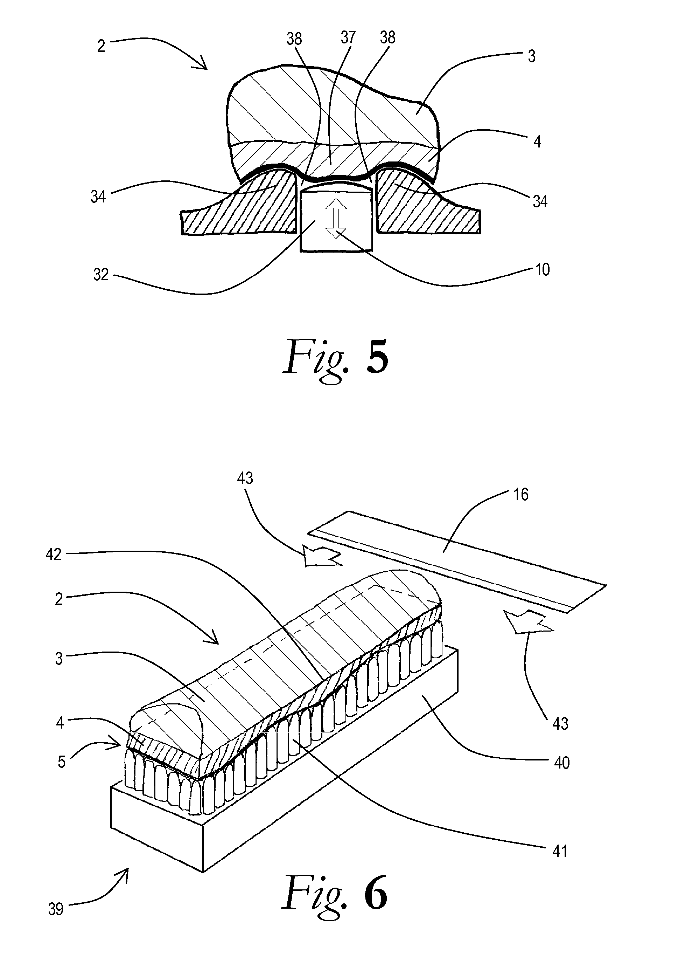

The lean 3 of a pork loin separates into two parts of lean meat (that is, two muscles) in the hip end of the loin, thus leaving a locally thicker layer 37 of fat (Fig. 5) in the middle of the loin cross-section at that end of the loin. With the additional possibility of decreasing the height of the raised central portion 34 by moving the piston 32 downwards in the direction 10 as shown in Fig. 5 to create a cavity 38 at the top of raised central portion 34, this locally increased thickness of fat may be compensated for by very simple means.

Thus, the embodiment of the inventive fat removing machine 1 shown in Figs 3-5 provides a very simple and thus effective solution to the problem of trimming fat from a pork loin, leaving a layer of fat 18 of nearly uniform thickness on the lean 3 of the loin (2). This embodiment of the fat removing machine 1 may be sufficient for use in markets which do not make particularly large demands to the uniformity of the thickness of the layer of fat 18 left on the lean 3.

In the embodiments described above and shown in Figs 1-5, the meat cut 2 is only supported by a variable shape support in the knife area 29 of a fat removing machine 1 of the invention. That is, the extension of the variable shape support is no larger than necessary to achieve the deformation according to the invention of the meat cut 2 at or near the edge of the knife tool 16.

Figs 6-7 show alternative embodiments of the invention. In these embodiments, the meat cut 2 is supported by a variable shape support in its entire extension during the cutting or trimming of fat from the meat cut 2. This variable shape support has generally the same extension as the meat cut 2 in question.

In fig. 6, a variable support 39 has a bed 40, from the upper side of which protrude a large number of supporting pillars or pistons 41, which are individually displaceable up and down by control means (not shown) inside the bed 40. Seen from above, the multitude of pistons 41 occupies an area corresponding to or larger than the face of the meat cut 2 from which fat is to be removed. The pistons 41 are preferably mounted close to each other, at least close enough to ensure a uniform and well-defined supporting of the meat cut 2, and they have preferably a rounded shape at their top ends.

The top ends of the pistons constitute a supporting surface for a meat cut 2, in the sense that when a meat cut 2 is placed on the support 39, the face of the meat cut facing down towards the support will attain a shape corresponding to the envelope face of the top ends of the pistons 41. The area and curvature of each piston top end, and the distance between adjacent pistons, must according to the invention be dimensioned so that the downward facing face of the meat cut 2 will not sag significantly between the pistons when the meat cut 2 is being pressed downwards against the support 39. Preferably, the downward facing face of the meat cut 2 should extend evenly, but following the virtual envelope surface enveloping the piston top ends.

In Fig. 6, a meat cut 2 (here a pork loin) has been laid on the variable shape support with its rind side facing down and is being pressed down onto the support by means not shown, these means keeping the meat cut 2 from moving horizontally. Each piston 41 has been displaced to an individual vertical position, whereby the top end of the piston is in a low position when the thickness of fat on the meat cut 2 above that piston 41 is large and in a higher position when the thickness of fat is smaller. The vertical position of each piston top end is thus adjusted in direct dependency of the thickness of fat at the point of the meat cut 2 which is supported by that piston. The result of this is that the fat-to-lean interface 42 will now approximate to a planar shape. In fig. 6, the fat-to-lean interface 42 is planar and horizontal.

In Fig. 6, a knife tool 16 is displaceable in a direction of movement 43 by means not shown. This direction 43 is horizontal and parallel to the longitudinal extension of the bed 40. As the knife tool 16 is being displaced in the direction of movement 43, it cuts through the meat cut 2 along a horizontal plane, and thus separates the fat 4 from the lean 3 along this horizontal plane. If the knife tool 16 is adjusted to the same height (that is, vertical position) as the height (vertical position) of the fat-to-lean interface 42, the meat cut 2 will be separated along this interface, that is, all fat will be separated from the lean 3, and the lean 3 will have essentially no fat (18) left.

If the knife tool 16 has been adjusted to a height, say, 5 mm below the vertical position of the fat-to-lean interface 42, a layer of fat (18) having a uniform thickness of 5 mm will be left on the lean 3.

The means or pressure members for pressing the meat cut 2 down onto the support 39 may be a resilient cushion, an air-filled, flexible tube or similar. The means must be able to ensure that the meat cut 2 is resting on the bed 40 without being moved or undue distorted by the action of the knife tool 16. The skilled person will be able to point to useful solutions on the background of the present disclosure.

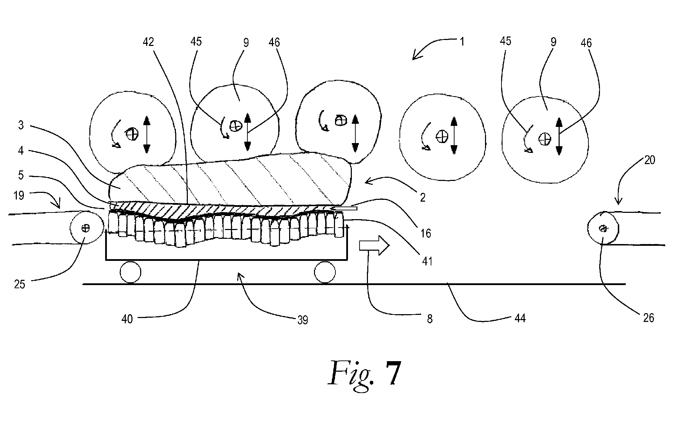

Fig. 7 illustrates a fat removing machine 1 utilising a bed 40 of the type shown in Fig. 6. In Fig. 7, the bed 40 is movable on a track 44 or similar in a direction of transport 8, past a stationary knife tool 16. A number of resilient traction rollers 9 act as pressure members to press the meat cut 2 down onto the movable bed 40 while at the same time rotating in a direction of rotation 45 so as to draw the bed 40 with the meat cut 2 forwards in the direction of transport 8. The resilient traction rollers 9 may be made with axes of rotation 11 which are displaceable in directions 46 against a downward-directed spring force. This may enable the traction rollers 9 to give way for thicker or more uneven meat cuts 2.

A conveyor belt 19 with an end roller 25 brings the meat cut 2 to the fat removing machine 1. The conveyor belt 19 delivers the meat cut 2 onto the movable bed 40 with its pistons 41, assisted by the two leftmost resilient traction rollers 9, while the bed 40 is kept stationary by braking means not shown. When the meat cut 2 is positioned on the bed 40, the pistons 41 are displaced in accordance with the distribution of fat thickness over the meat cut, so that a planar fat-to-lean interface 42 is obtained, in the same way as has been described with reference to Fig. 6.

When the pistons 41 are positioned, the bed 40 is drawn forwardly in the direction of transport 8 by driving means not shown, assisted by the rotation (45) of the resilient traction rollers 9, and past the stationary knife tool 16. As the meat cut 2 is drawn past the knife tool 16, the knife tool 16 separates the fat 4 from the lean 3. The thickness of fat (18) left on the lean 3 may be controlled by adjusting the vertical position of the knife tool 16, as has been described with reference to Fig. 6, or by shifting the vertical positions of the pistons 41 by the same amount. At the end of travel of the movable bed 40, the separated fat 4 and lean 3 are removed by a conveyor belt 20 with roller 26, assisted by the rightmost traction rollers 9.

For the operation of a fat removing machine 1 of the present invention, appropriate control of the elements 30 is necessary, along with appropriate control of the various mechanical components of the machine.

In general, the elements 30, such as the wheels 6, the swingable runners 23, the piston 32, or the pistons 41, will be displaced by computer control via suitable actuators and mechanisms. In respect of computer hardware, actuators and mechanisms for displacing the elements 30, etc., the skilled person will be able to point to useful solution details on the background of the present disclosure.

In the embodiments of Figs 1-5, the elements 30 are to be positioned in accordance with i) the curvature and position of the fat-to-lean interface 42 inside the particular portion of the meat cut 2 which is present in the knife area 29 of the fat removing machine 1 and ii) the momentary position of the meat cut 2 in the direction of transport 8.

Information on the curvature and position of the fat-to-lean interface 42, as well as information on the position of the meat cut 2 in the direction of transport 8 is thus to be supplied to a control computer in the fat removing machine 1, and the control computer will have to displace the elements 30 accordingly via suitable actuators and mechanisms.

In a first embodiment of a computer control system for the fat removing machine 1 in either of the embodiments in Figs 1-5, the information on the curvature and position of the fat-to-lean interface 42, that is, in general a total mapping of this interface, must preferably be available before the meat cut 2 is fed into the fat removing machine 1. On the basis of this information and on the basis of the momentary position of the meat cut 2 in the direction of transport 8, the computer control system will generate consecutive sets of data for curvature and position of the fat-to-lean interface 42 as seen in a cross-section of the meat cut 2, taken immediately forward of the knife tool 16. The control computer will then position the elements 30 vertically in accordance with these sets of data.

The mapping of the fat-to-lean interface 42 in a meat cut 2 from which fat is to be removed may e.g. be made in a CT-scanning unit placed upstream of the fat removing machine 1, and the map data for the entire meat cut 2 may then be transmitted to the machine's control computer for use when the meat cut 2 is treated in the machine 1. CT scanning has proved to give a very precise mapping, albeit at a large expense, and relevant methods are known.

According to the invention, other methods for mapping the fat-to-lean interface 42 may be used as well. For example, ultra-sound echo technique may be used for this mapping. It may in this case be advantageous first to remove rind or skin from the first face of the meat cut 2, so that the fat to be removed is exposed prior to measuring the thickness of fat. An ultra-sound measuring head is dependent on an intimate contact with the meat cut for transferring the ultra-sound vibration efficiently to and from the meat cut, and such contact may by more easily obtained by contacting a fat surface than by contacting a rind or skin surface. The rind often tends to be rather rigid and unyielding whereas the fat may well be quite yielding and compliant, thus providing for a good and efficiently sound-transmitting contact between an ultra-sound transceiver head and the meat cut. It may well be undesirable to put sound-transmitting fluid or gel onto the meat cut, as is normally used when using ultra-sound echo measuring equipment on e.g. human patients.

According to the invention, X-ray reflection technique may alternatively be utilised for mapping the interface 42. X-ray reflection may be used in an echo mode rather the same way as ultra-sound echo technique, where X-rays are emitted towards the first face of the meat cut and reflected from the discontinuity provided by the fat-to-lean interface 42. According to the invention, it is however envisaged that X-rays emitted at an oblique angle towards said first face, and reflected from the interface at a corresponding, oblique angle may yield better results.

As a further alternative, Sub-Surface Laser Scattering technique may be used for assessing the thickness of fat. By this technique, light from a Laser Light Emitting Diode (LED) is emitted towards said first face of the meat cut, and light emitted back from the surrounding surface is detected or assessed. This technique is known from measuring i.a. turbidity in fluids. As fat and rind are both translucent, the light will penetrate the surface (with or without rind or skin) and will be scattered in the subcutaneous fat so that some of the light will illuminate part of the surface surrounding the point of entrance of the light from the Laser LED. The diameter of the illuminated area and the intensity of the illumination will provide suitable information, from which the local thickness of the layer of subcutaneous fat may be assessed by suitable computation methods.

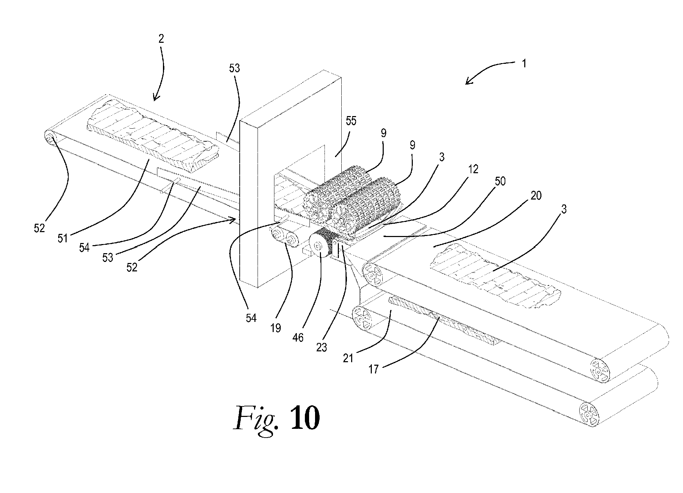

In a second embodiment of the computer control system, curvature and position information for any portion of the meat cut 2 must be available immediately prior to the portion of the meat cut 2 entering the knife area 29. The curvature and position of the fat-to-lean interface 42 may then be progressively scanned a short distance upstreams of the knife area 29 of the fat removing machine 1. A scanning unit for scanning a short portion of the meat cut 2 may preferably be arranged in immediate connexion with the conveyor belt 19 bringing the meat cut 2 into the fat removing machine 1. Such a scanning unit is shown in Fig. 10 at 55.

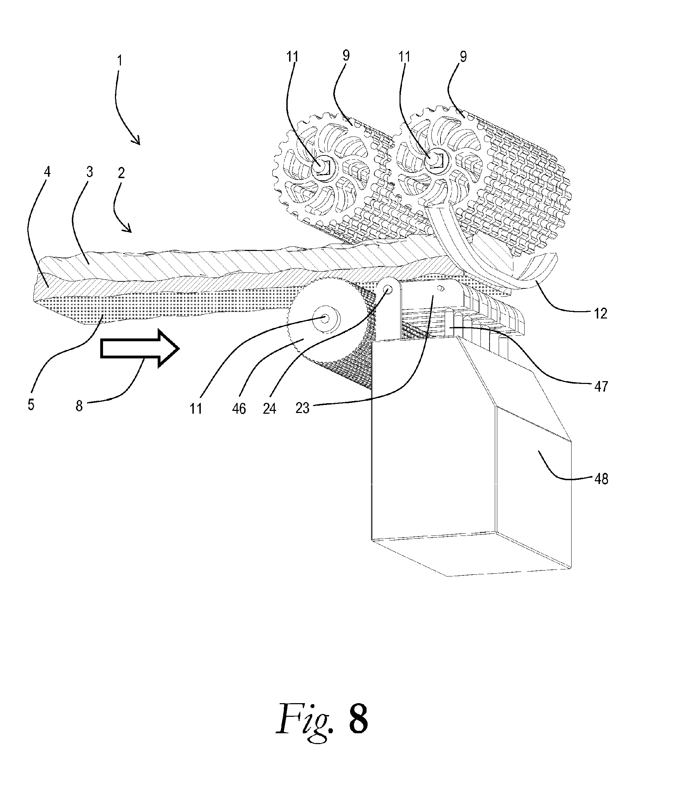

If no slip may be expected between the conveyor belt 19 and the meat cut 2, the movement of the conveyor belt 19 may be utilised to indicate the position of the meat cut 2 in the direction of transport 8. Instead of the conveyor belt 19, e.g. the resilient traction roller 9 or the toothed traction roller 46 (Figs 8-10) may be utilised for indicating position. If slip is to be expected, the position of the meat cut 2 must be detected by separate means.

As an alternative, or in addition to, such scanned data, previously stored data describing a typical thickness-of-fat distribution in a meat cut 2 of the type in question may be used. The build or bodily constitution of slaughter animals often falls within a limited number of types, and thickness-of-fat distribution data for each type may be registered. The thickness-of-fat distribution for a particular meat cut may then be reproduced with satisfactory precision on the basis of the stored data for its animal type, together with its size and/or weight.

As a further alternative to scanned data, sampled data may be used. If the thickness of fat is sampled in a few points over the face of the meat cut 2 by e.g. ultrasound echo technique, the sample values of fat thickness may be combined with previously stored data to estimate the continuous distribution of the thickness of fat over the entire meat cut. The sampling may be effected in a separate station upstream of the fat removing machine 1, or a sampling station may be arranged in connexion with the conveyor belt 19. Several techniques of invasive measuring of fat thickness are known, which may also be used, that is, thickness of fat measured by inserting a needle means with optical detector means through the rind of a pork cut, through the fat and into the lean.

According to the invention, data from the measurements made on the meat cut in or upstreams of the fat removing machine 1 may be utilised for subsequent sorting or pre-sorting of the meat cuts 2 from which fat has been removed. The data may be combined or correlated with data from the slaughterhouse's order book so as to enable sorting or pre-sorting into different shipments of meat. The measurements made for the purpose of controlling the fat removing machine 1 will be particularly well suited for sorting the meat cut 2 from which fat has been removed, into different classes or for shipment to different customers or markets.

Figs 8-10 illustrate an alternative embodiment of the fat removing machine 1 in Figs 1-2. Only the main components of the machine are shown, with various amounts of components being shown in each of Figs 8-10.

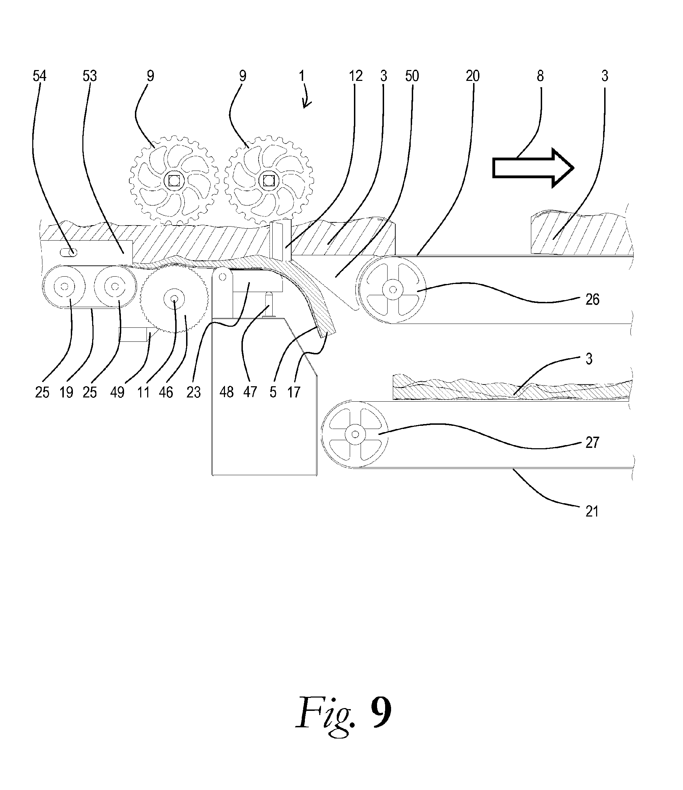

In Fig. 8, a meat cut 2 such as a pork loin is being drawn through the machine 1 in a direction of transport 8. The components of Fig. 8 are also shown in Figs 9-10. A conveyor belt (19) supporting a trailing part of the meat cut 2 is not shown in Fig. 8. In the embodiment shown, the fat removing machine 1 has two resilient traction rollers 9, a first (leftmost) one cooperating with a toothed, rigid traction roller 46 with axis of rotation 11, situated below the meat cut 2. The toothed traction roller 46 engages the rind 5 of the meat cut and produces a firm tractive force. Each of the traction rollers 9, 46 is driven by drive means not shown.

A second, resilient traction roller 9 is placed above the swingable runners 23 in the same way as in Fig. 2. The swingable runners 23 are moved via pushrods 47 by control and displacement means not shown, located inside a driving unit 48.

The knife tool 16 here comprises a curved knife blade 12 which is stationary, apart from possible vertical adjustability for setting a desired thickness of fat left on the lean 3. The curvature of the knife blade is chosen so as to obtain an initial approximation to the cross-sectional curvature of the fat-to-lean interface 42 in the unstressed condition of the meat cut 2. By this measure, the meat cut 2 will not need to be deformed to an extent where the fat-to-lean interface 42 constitutes a planar face, but only sufficiently to get the interface 42 to approximate to the curved shape of the knife blade 12. In Fig. 8, the knife blade 12 has a linear shape in a middle section and curved, approximately circular shapes toward its end sections. According to the invention, the curvature of the knife blade 12 may be chosen according to the particular type and size of meat cut from which fat is to be removed in the machine.

Fig. 9 is a side view corresponding to Fig. 8 but showing more of the main components of the machine 1. The components of Fig. 9 are also shown in Fig. 10. In addition to what may be seen in Fig. 8, a short conveyor belt 19 running on rollers 25 is located upstream of the toothed traction roller 46, and a toothed scraper bar 49 scrapes rind debris from the toothed traction roller 46. Such toothed traction rollers and scraper bars are well known in the trade *per se*.

A stationary separator 50 is situated downstream of the knife blade 12 for separating the cut-off fat 17 with rind 5 from the lean 3. The lean 3 is received by a conveyor belt 20 running on a roller 26, and the fat 17 with rind (5) is received by a conveyor belt 21 running on a roller 27.

Fig. 10 is an oblique view of the machine 1 of Figs 8-9, showing all the main active components of the machine 1. In addition to what is seen in Fig. 9, an upstream conveyor belt 51 brings the meat cuts 2 into the machine 1, and guide plates 53 which are supported and controlled via guide plate bars 54 by control means not shown, centre the meat cuts 2 sideways on the conveyor belt 51. From the conveyor belt 51, the meat cuts 2 are conveyed through the measuring station 55 and delivered to the short conveyor belt 19, and they move forwards through the knife area (29) of the fat removing machine 1 as explained above with reference to Fig. 8 and Fig. 9.

In the embodiment in Fig. 10 of the fat removing machine 1, a measuring station is arranged as schematically shown at 55. In this station, the thickness-of-fat distribution is measured for each meat cut 2 while the cut is passing through the measuring station 55. Suitable scanning heads or units may e.g. be arranged along the bottom of the large, rectangular aperture of the scanning unit 55. Data from the measurements are delivered to a control system (not shown) which is also controlling the shape of the meat carrying surface in the machine, or the shape of a face of the support, respectively, in any of the ways previously explained.

At present, it is generally preferred to support the meat cut 2 from the fat or rind side and press it towards the support from the meat side, as it has been describe above and shown in the drawings. It is preferred as well to support the meat cut 2 from below and press it against the support from above, as likewise described and shown. However, these embodiments are only preferred embodiments, and according to the invention, support from the other side or use of any other orientation may be utilised as well.

### List of Reference Designations in the Drawings

- 1: fat removing machine
- 2: meat cut
- 3: the lean of the meat cut
- 4: the fat of the meat cut
- 5: the rind of the meat cut
- 6: wheels
- 7: axis of rotation of wheel
- 8: direction of transport
- 9: resilient traction roller
- 10: directions of displacement of wheel or runner
- 11: axis of rotation of traction roller
- 12: knife blade
- 13: lower clamping part
- 14: upper clamping part
- 15: knife support
- 16: knife tool
- 17: layer of fat cut off
- 18: layer of fat left on the lean
- 19: conveyor belt
- 20: conveyor belt
- 21: conveyor belt
- 22: direction of pressing of traction roller
- 23: swingable runner
- 24: axis of swing
- 25: conveyor belt roller
- 26: conveyor belt roller
- 27: conveyor belt roller
- 28: traction roller deformation
- 29: knife area
- 30: displaceable element
- 31: fixed support
- 32: piston
- 33: central bore
- 34: raised central portion of support
- 35: rounded upper face of piston
- 36: side of meat cut
- 37: locally thicker layer of fat
- 38: cavity in raised central portion of support
- 39: support
- 40: bed
- 41: piston
- 42: fat-to-lean interface
- 43: direction of movement of knife tool
- 44: track for movable bed
- 45: direction of rotation of traction roller
- 46: toothed traction roller
- 47: pushrod for runner
- 48: driving unit for runners
- 49: toothed scraper bar
- 50: separator
- 51: conveyor belt
- 52: conveyor belt roller
- 53: guide plate
- 54: guide plate bar
- 55: measuring station

## Claims

1. A method for removing fat from one face of a meat cut, the method comprising:
Moving the meat cut along a transport path and past a knife tool which is not displaceable in the direction of the transport path, whereby the knife tool cuts a layer of fat and possibly skin from said face of the meat cut,
the method being **characterised in** further comprising:
Temporarily adapting the shape of a fat-to-lean interface inside the meat cut to the shape of the knife tool by effecting deformation of the meat cut in directions transverse to said face while the meat cut is being moved past the knife tool; and:
Bringing the fat-to-lean interface into a desired distance from a cutting edge of the knife tool during cutting.

2. A method for removing fat from one face of a meat cut, the method comprising:
Moving a knife tool along a cutting path and through the meat cut while keeping the meat cut from displacing in the direction of the cutting path, whereby the knife tool cuts a layer of fat and possibly skin from said face of the meat cut,
the method being **characterised in** further comprising:
Temporarily adapting the shape of a fat-to-lean interface inside the meat cut to the shape of the knife tool by effecting deformation of the meat cut in directions transverse to said face; and:
Bringing the fat-to-lean interface into a desired distance from a cutting edge of the knife tool during cutting.

3. A method according to claim 1 or 2, wherein said deformation is being effected by pressing the meat cut between a member having a controllable shape and a resilient member, the

4. A method according to any of claims 1-3, wherein said deformation is being effected locally in a portion of said meat cut immediately preceding said knife tool.

5. A method according to any of claims 1-4, wherein said desired distance is kept constant across the whole of said face of the meat cut, whereby a layer of fat having a thickness with correspondingly limited variation is being left on the face.

6. A method according to any of claims 1-5, wherein said desired distance is controlled by controlling the position of the meat cut relative to the knife tool, or the knife tool relative to the meat cut, in a direction transversely to said face of the meat cut, whereby a layer of fat having a corresponding, desired thickness is being left on the face.

7. A method according to any of claims 1-6, wherein said deformation is controlled on the basis of previously stored data and/or data obtained from measurement carried out on the meat cut immediately prior to cutting, both types of data describing a thickness-of-fat distribution along said face, whereby some of said data are preferably sampled values, each stating a local fat thickness.

8. Apparatus for removing fat from one face of a meat cut in accordance with the method of claim 1, the apparatus comprising:
A conveyor system for moving a meat cut along a transport path with said face extending in the direction of the transport path and in a direction of extension transverse to the transport path; and:
A knife tool for separating a layer of fat and possibly skin along said face from the rest of the meat cut, the knife tool extending in said direction of extension transverse to the transport path while not being displaceable in the direction of the transport path,
the apparatus being **characterised in** further comprising:
Actuators for adapting the shape of a meat carrying surface of the conveyor system, at least in areas immediately preceding a cutting edge of the knife tool, in dependency of data describing the distribution and thickness of fat on said face; and:
One or more pressure members for pressing the meat cut against the meat carrying surface.

9. Apparatus according to claim 8, wherein said meat carrying surface comprises a number of wheels having axes of rotation in parallel with said direction of extension and occupying an area of the meat carrying surface at least immediately preceding said cutting edge, the axis of each wheel being displaceable by means of one of said actuators in a direction transverse to said transport path and to said direction of extension while not being displaceable in the direction of the transport path.

10. Apparatus according to claim 8, wherein said meat carrying surface comprises a number of swingable runners having axes of swing in parallel with said direction of extension and supporting edges or faces occupying an area of the meat carrying surface at least immediately preceding said cutting edge, each runner being displaceable by means of one of said actuators in a direction transverse to said transport path and to said direction of extension while not being displaceable in the direction of the transport path.

11. Apparatus according to claim 8, wherein said meat carrying surface comprises a number of pistons having axes of movement transverse to said transport path and to said direction of extension and supporting ends occupying an area of the meat carrying surface at least immediately preceding said cutting edge, each piston being displaceable along its axis of movement by means of one of said actuators.

12. Apparatus according to claim 8, wherein said meat carrying surface comprises a carriage for carrying the meat cut past said knife tool and having a number of pistons with axes of movement transverse to said transport path and to said direction of extension, supporting ends of the pistons supporting said face of the meat cut in its entirety, each piston being displaceable along its axis of movement by means of one of said actuators.

13. Apparatus according to any of claims 8-12, further comprising a mechanism for displacing the conveyor system or carriage, respectively, and/or the knife tool in a direction transverse to said transport path and to said direction of extension, thereby controlling the thickness of a layer of fat being left on said face of said meat cut after cutting.

14. Apparatus for removing fat from one face of a meat cut in accordance with the method of claim 2, the apparatus comprising:
A support for receiving a meat cut with said face extending in directions of extension of the support and keeping the meat cut from displacing in said directions of extension;
A knife tool for separating a layer of fat and possibly skin along said face from the rest of the meat cut; and:
A mechanism for moving the knife tool through a transport path extending along the support and through the meat cut, thereby cutting a layer of fat from the rest of the meat cut,
the apparatus being **characterised in** further comprising:
Actuators for adapting the shape of a face of the support, at least in areas swept by a cutting edge of the knife tool, and in dependency of data describing the thickness of fat on said face; and:
One or more pressure members such as resilient pressure rollers for pressing the meat cut against the support.

15. Apparatus according to claim 14, wherein said support comprises a number of pistons having axes of movement transverse to said transport path and to said direction of extension and supporting ends occupying an area of the support swept by said cutting edge, each piston being movable along its axis of movement by means of one of said actuators.

16. Apparatus according to claim 14 or 15, further comprising a mechanism for displacing said support, and/or said mechanism for moving the knife tool, in a direction transverse to said transport path and to said direction of extension, thereby controlling the thickness of a layer of fat being left on said face of said meat cut after cutting.
